# EUROPÄISCHE PATENTSCHRIFT

(11) **EP 2 426 258 B1**
(45) Veröffentlichungstag und Bekanntmachung des Hinweises auf die Patenterteilung: **21.06.2017**
(21) Anmeldenummer: 11006918.4
(22) Anmeldetag: 24.08.2011
(51) Int. Cl.: E01C 23/088, B65G 41/00

(54) **Förderer und Baumaschine mit einem Förderer**
Conveyer and construction machine with a conveyer
Convoyeur et engin doté d'un convoyeur

(30) Priorität: 07.09.2010 DE 102010044650
(43) Veröffentlichungstag der Anmeldung: 07.03.2012
(60) Teilanmeldung: 17000523.5
(73) Patentinhaber: BOMAG GmbH, 56154 Boppard (DE)
(72) Erfinder: Forster, Hans, 56290 Sabershausen (DE); Meurer, Markus, 53489 Sinzig (DE); Haubrich, Thomas, 56290 Gödenroth (DE)
(74) Vertreter: Heidler, Philipp

(56) Entgegenhaltungen:
- EP-A1- 2 113 613
- DE-A1- 2 831 717
- DE-U1-202009 003 824
- US-A- 4 186 968

## Beschreibung

Die Erfindung betrifft einen Förderer oder dergleichen Fördermittel, beispielsweise ein Förderband oder einen Endlosförderer zum Anbau an eine Baumaschine und insbesondere eine Straßenbelagsfräse, der mit einem Anlenkbereich gelenkig an die Baumaschine anlenkbar und über eine Hubvorrichtung mit einem Ladebereich gegen die Baumaschine verschwenkbar ist, wobei die Hubvorrichtung wenigstens ein Stellelement umfasst, das mit einem Fixbereich am Endlosförderer befestigt ist und mit einem relativ zum Fixbereich aktiv bewegbaren Stellbereich über wenigstens ein Zugelement mit der Baumaschine derart in Wirkverbindung bringbar ist, dass sich der Ladebereich des Förderers bei einer Bewegung des Stellbereichs relativ zum Fixbereich verschwenkt.

Darüber hinaus betrifft die Erfindung auch eine Baumaschine und insbesondere eine Straßenbelagsfräse, an der ein solcher Förderer oder dergleichen Fördermittel angeordnet ist.

Vorgenannte Förderer und mit solchen versehene Baumaschinen sind aus dem Stand der Technik bekannt. Die Fördermittel dienen dabei vorzugsweise dem Abtransport von Endprodukten, wie sie beispielsweise beim Abfräsen von Straßenbelägen entstehen. Es gibt darüber hinaus aber auch Baumaschinen, bei denen solche Fördermittel dem Zuführen von Baumaterialien dienen.

In ihrer Ausgestaltung gibt es unterschiedliche Arten von Förderern, wobei im Zuge der vorliegenden Erfindung sämtliche Förderer oder dergleichen Fördermittel umfasst sind, die verschwenkbar an einer Baumaschine oder dergleichen Maschinen angeordnet werden können. Insofern sind davon also Förderbänder, Plattenförderer, Stetigförderer etc. umfasst.

Dabei ist es aus dem Stand der Technik bekannt Förderer so gelenkig an einer Baumaschine anzuordnen, dass sie über Hubzylinder oder dergleichen Stellelemente insbesondere vertikal verschwenkt werden können, um beispielsweise verschieden hohe Lkw optimal beladen zu können. Darüber hinaus wird der Förderer über die gleichen Stelleelemente auch bis auf das Straßenniveau abgelassen, wenn er für bestimmte Anwendungen von der Baumaschine demontiert werden muss. Je nach Konstruktion verbleibt das Stellelement am demontierten Förderer, an der Baumaschine oder auf dem Förderer.

Ausführungsformen, bei denen beispielsweise ein Hubzylinder an der Baumaschine verbleibt, besitzen den Nachteil, dass der nach hinten ragende Hubzylinder ein rückwärtiges Heranfahren der Baumaschine an ein Hindernis, beispielsweise eine Hauswand, verhindert. Bei einem an einer Straßenfräsmaschine angeordneten Förderer ist insofern dann kein vollständiges Bearbeiten der Straßenoberfläche möglich. Darüber hinaus bildet der Hubzylinder einen Gefahrenpunkt für den Maschinenbediener, da er so von der Baumaschine absteht, dass sich der Bediener daran leicht verletzen kann. Ein derartiger Förderer ist beispielsweise aus der US 4,186,968 A bekannt.

Bei einem mit einem solchen Hubzylinder ausgerüsteten Förderer erfolgt die Koppelung zwischen Förderer und Baumaschine meistens über eine Kombination aus Hubzylinder und einem Zugelement und insbesondere einem Stahlseil oder einer Kette. Dabei muss, je nach Höhe des zu beladenden Lkw bzw. beim Ablegen und Anheben des Förderers vom Boden, die Kette, die den Hubzylinder mit dem Förderer verbindet, in einem zusätzlichen Arbeitsgang über einen Zugelement-Verkürzer gekürzt werden. Dafür muss der Förderer in einem vorhandenen Hilfsseil abgelegt und dadurch der Zylinder entspannt werden.

Bei einer Ausführungsform, bei der der Hubzylinder am Förderer befestigt ist, ist es erforderlich, den Hubzylinder mit einem sehr großen Hub auszubilden, der bei abgelegtem Förderband in ausgefahrener Position auf dem Band verbleibt und in einem separaten Schritt parallel zum Band ausgerichtet werden muss. Hinzu kommt, dass der Zylinder aufgrund des benötigten Hubs in der Nähe des oberen Förderbandes und insbesondere des Ladebereichs befestigt sein muss, was sich negativ auf die Hebeverhältnisse zwischen Maschine und Förderer auswirkt. Insbesondere sind bei einer solchen Anordnung des Hubzylinders neben den Förderlasten hohe Lasten rein aufgrund der Hubvorrichtung abzufangen.

Aufgabe der Erfindung ist es folglich einen Förderer bzw. eine Baumaschine mit einem solchen Förderer anzugeben, bei dem eine verbesserte, sicherere und effektivere Verschwenkbarkeit des Förderers gewährleistet ist und bei dem auch im Lager- und im Wartungszustand die Sicherheit des Bedienpersonals gewährleistet ist.

Diese Aufgabe wird durch einen Förderer oder dergleichen Fördermittel zum Anbau an eine Baumaschine und insbesondere eine Straßenbelagsfräse gelöst, welcher mit einem Anlenkbereich gelenkig an die Baumaschine anlenkbar und über eine Hubvorrichtung mit einem Ladebereich gegen die Baumaschine verschwenkbar ist, wobei die Hubvorrichtung wenigstens ein Stellelement umfasst, das mit einem Fixbereich am Förderer befestigt oder befestigbar ist und mit einem relativ zum Fixbereich aktiv bewegbaren Stellbereich über wenigstens ein Zugelement mit der Baumaschine derart in Wirkverbindung bringbar ist, dass sich insbesondere der Ladebereich des Förderers bei einer Bewegung des Stellbereichs relativ zum Fixbereich verschwenkt, wobei am Förderer ein erstes Umlenkelement vorgesehen ist, über das das vom Stellbereich des Stelleelements zugeführte Zugelement umlenkbar und zur Baumaschine führbar ist.

Insbesondere wird diese Aufgabe auch durch eine Baumaschine mit einem solchen Förderer gelöst, wobei aus Redundanzgründen die folgenden Ausführungen zum erfindungsgemäßen Förderer identisch auf eine Baumaschine mit einem solchen Förderer übertragbar jedoch hier nicht explizit aufgeführt sind.

Ein wesentlicher Punkt des erfindungsgemäßen Förderers ist die Anordnung eines Umlenkelementes am Förderer, das die über das Stellelement auf das Zugelement initiierte Schwenkkraft in die Baumaschine einleitet und so eine Schwenkbewegung des Förderers verursacht. Dabei wird im Zuge der Erfindung unter Zugelement ein jedes Element verstanden, über das Zugkräfte vom Stellelement auf die Baumaschine umleitbar sind. Vorzugsweise betrifft ein solches Zugelement ein Seil, insbesondere ein Stahlseil oder eine Kette. Unter Ladebereich wird im Umfang der Erfindung der Bereich verstanden, der zum Zuführen bzw. Abgeben eines Fördergutes und insbesondere zum Abgeben eines Fördergutes in einen Lkw ausgebildet ist.

Das Stellelement ist dabei so ausgebildet, dass es aktiv, also hydraulisch, elektrisch, pneumatisch oder auf ähnliche Art und Weise angetrieben, eine Relativbewegung zwischen dem Fixbereich und dem Stellbereich erlaubt. Durch das am Stellbereich angeordnete Zugelement können so Relativbewegungen unter Umlenkung am ersten Umlenkelement in die Baumaschine abgeleitet bzw. der am ersten Umlenkelement gekoppelte Förderer bewegt werden.

Vorzugsweise ist dabei das Stellelement bzw. die Hubvorrichtung derart ausgebildet, dass die Relativbewegung zwischen Stellbereich und Fixbereich eine vertikale Schwenkbewegung des Förderer, also ein Anheben bzw. Absenken des Lagerbereichs verursacht.

Das Zugelement ist bei einer vorteilhaften Ausführungsform derart ausgebildet und am Förderer angeordnet, dass sich der Ladebereich bei einer Bewegung des Stellbereichs auf den Fixbereich zu anhebt und bei einer entgegengesetzten Bewegung absenkt oder umgekehrt. Sobald also der Stellbereich relativ zum Fixbereich so bewegt wird, dass er sich von diesem weg oder auf diesen zu bewegt, wird direkt eine Absenk- bzw. Anhebebewegung insbesondere des Ladebereichs des Förderers initiiert.

Erfindungsgemäß weist das Stellelement am bewegbaren Stellbereich ein zweites Umlenkelement auf, das mit dem ersten Umlenkelement mittels des Zugelementes einen Flaschenzug derart bildet, dass sich die Relativbewegung zwischen dem Fixbereich und dem Stellbereich vervielfacht auf die Schwenkbewegung des Förderers auswirkt. Das bedeutet, dass das Stellelement und insbesondere dessen Stellbereich derart mit dem Zugelement gekoppelt ist, dass sich die Relativbewegung zwischen Stellbereich und Fixbereich am Stellelement vervielfacht auf die Bewegung des Förderers auswirkt. Bei einem Flaschenzug mit einer festen und einer losen Rolle ergibt sich so beispielsweise ein Übersetzungsverhältnis von 1:2, sodass die Bewegung des Stellbereiches relativ zum Fixbereich um 1 m in einer Relativbewegung zwischen dem ersten Umlenkelement und der Baumaschine um 2 m resultiert. Als sogenannte "lose Rolle" fungiert dabei das zweite Umlenkelement, da es zur Initiierung der Schwenkbewegung des Förderers bewegt wird; die "feste Rolle" wird dagegen, durch das ortsfest auf dem Förderer montierte erste Umlenkelement gebildet.

Vorzugsweise ist das Zugelement mit einem ersten Montageende an einem ersten Montagepunkt am Förderer befestigt, von dort über wenigstens das zweite Umlenkelement am Stellbereich des Stellelementes zum wenigstens dem ersten Umlenkelement am Förderer, von dort zur Baumaschine führbar und dort mit einem zweiten Montageende befestigbar. Über den so ausgebildeten Flaschenzug wird das zuvor beschriebene 1:2-Übersetzungsverhältnis gebildet, sodass bei sehr kleinen Relativbewegungen zwischen Stellbereich und Fixbereich hohe Schwenkbewegungen am Förderer realisierbar sind. Auf diese Weise ist es dann sehr einfach möglich den vollen Schwenkbereich des Förderers, also beispielsweise von einer maximalen Beladehöhe bis zu einem Ablegen auf dem Boden ohne Arbeiten am Zugelement und insbesondere der Verwendung eines Hilfsseils durchzuführen.

In einer besonderen Ausgestaltung weisen das erste und/oder das zweite Umlenkelement wenigstens eine Umlenkrolle auf. Über diese Umlenkrollen kann das Zugelement auf bekannte Art und Weise geführt werden, wobei Reibungsverluste minimiert werden. Bei Flaschenzuganordnungen mit mehreren (freien und losen) Rollen können dann entsprechend mehrere Umlenkrollen an jedem Umlenkelement angeordnet werden. Hier sind sämtliche aus dem Stand der Technik bekannten Anwendungsformen für die Realisierung von Flaschenzügen und entsprechenden Übersetzungsverhältnissen anwendbar.

Das Stellelement ist vorteilhafterweise derart ausgebildet und am Förderer angeordnet, dass die Bewegung des Stellbereichs relativ zum Fixbereich im Wesentlichen in einer Achse parallel zur Haupterstreckungsachse des Förderers erfolgt. Auf diese Weise ist die Hubvorrichtung so in den Förderer integriert, dass sie sowohl im Betrieb als auch im Lagerfall, also wenn der Förderer nicht an der Baumaschine angelenkt ist, keine Verletzungsrisiken bildet. Grundsätzlich kann das Stellelement achsenparallel oder nicht achsenparallel zum Förderer angeordnet sein.

Um eine achsenparallele Ausrichtung des Stellelementes parallel zur Haupterstreckungsachse des Förderers zu erreichen weisen vorzugsweise wenigstens im maximal verschwenkten Zustand des Förderers, also im maximal nach oben geschwenkten Zustand und im maximal nach unten geschwenkten insbesondere auf dem Boden abgelegten Zustand, der Fixbereich des Stellelementes zum Anlenkbereich des Förderers und der Stellbereich zum Ladebereich oder umgekehrt. Insbesondere die Anordnung des Stellelementes derart, dass es mit seinem Fixbereich zum Anlenkbereich weist und insbesondere im Anlenkbereich angeschlagen ist, garantiert optimale Hebel- und Belastungsverhältnisse, da die Hauptlasten der Hubvorrichtung direkt in die Baumaschine im Anlenkbereich eingeleitet werden.

In einer besonderen Ausführungsform ist das Stellelement senkrecht zu seiner Haupterstreckungsachse ortsfest und mit seiner Haupterstreckungsachse im Wesentlichen parallel zur Haupterstreckungsachse des Förderers angeordnet. Die ortsfeste Anordnung des Stellelementes stellt einen hohen Sicherheitsfaktor beim Betrieb des Förderers und insbesondere bei seinem Verschwenken dar. So ist gewährleistet, dass große Teile der Hubvorrichtung während des Betriebs aber auch im Lagerzustand nicht aus dem Förderer hervorstehen und Verletzungsrisiken bilden. Darüber hinaus sind die meist sensiblen Stellelemente auf diese Weise optimal vor mechanischen Beeinflussungen, insbesondere im Lagerzustand, geschützt bzw. schützbar.

Das Stellelement weist beispielsweise wenigstens einen Hubzylinder auf. Ein solcher Hubzylinder kann beispielsweise ein hydraulischer, pneumatischer oder elektrisch betriebener Hubzylinder sein, wobei insbesondere die Verwendung hydraulischer Hubzylinder die Integration in die meist vorhandenen Hydrauliksysteme einer Baumaschine erlaubt. Ein solcher Hubzylinder kann insbesondere die zuvor erwähnten Bedingungen der achsenparallelen Anordnung zur Haupterstreckungsachse des Förderers sehr einfach erfüllen. Über ihn ist eine Bewegung des Stellbereichs, insbesondere am freien Ende einer Hubzylinderstange relativ zum Fixbereich des Hubzylinders einfach möglich.

Es ist aber auch möglich, dass das Stellelement wenigstens eine Seilwinde oder dergleichen Rotations-Stellelemente aufweist. Über eine Seilwinde ist ebenso wie bei einem Hubzylinder eine platzsparende Anordnung des Stellelementes auf dem Förderer möglich, wobei das an der Seilwinde angeordnete Zugseil mit seinem freien Ende den Stellbereich bildet, der dann mit einem Zugelement in Wirkverbindung bringbar ist. Durch die Koppelung des als Seilwinde ausgebildeten Stellelementes mit dem als Flaschenzug ausgebildeten Zugelement, ergibt sich eine Hubvorrichtung, bei der mit geringen Windenumdrehungen hohe Schwenkbewegungen des Förderers und insbesondere dessen Ladebereichs erzielt werden können. Grundsätzlich wäre es natürlich auch möglich, die Seilwinde und insbesondere das bewegbare Montageende der Seilwinde direkt über das erste Umlenkelement mit der Baumaschine zu koppeln, ohne auf das Zugelement und insbesondere dessen Flaschenzuganordnung zurückzugreifen. Jedoch ist die "gekoppelte" Ausbildung vorteilhaft.

Zur Montage des ersten Montagepunktes und/oder des ersten Umlenkelementes ist vorzugsweise am Förderer eine Montagebrücke vorgesehen, die einen Förderbereich des Förderer unter Bildung eines lichten Förderfreiraumes im Wesentlichen überspannt und an der der erste Montagepunkt und/oder das erste Umlenkelement angeordnet sind. Die Montagebrücke dient dem Anschluss des Zugelementes und insbesondere des Flaschenzuges, wobei die Ausbildung als Montagebrücke und die Bildung des lichten Förderfreiraumes über dem Förderbereich den ungehinderten Transport des Fördergutes auf dem Förderer sicherstellt.

In einer besonderen Ausgestaltung umfasst die Montagebrücke wenigstens zwei Brückenlager, die beidseitig des Förderbereichs am Förderer angeordnet und über wenigstens ein Querträgerelement miteinander verbunden sind, wobei der erste Montagepunkt und/oder das erste Umlenkelement am Querträgerelement angeordnet sind. Die Anlenkung erfolgt hier vorzugsweise in der Schwerachse am Querträgerelement.

Es ist denkbar, den Montagepunkt und/oder das erste Umlenkelement und/oder das zweite Umlenkelement in einer Ebene senkrecht zur Schwenkachse des Förderers anzuordnen. Dies Ausbildung garantiert die zwängungsfreie und platzsparende Ausbildung eines Flaschenzuges, wobei insbesondere die Einleitung von Torsionslasten in den Förderer vermieden werden.

Auch ist es möglich, die Montagebrücke über Stell- bzw. Befestigungselemente entlang des Förderers bewegbar auszubilden. Auf diese Weise ist eine optimale Adaption des Krafteinleitungspunktes des Zugelementes am Förderer bzw. eine statische Optimierung der Verbindung zwischen Förderer und Baumaschine möglich.

Weitere Ausführungsformen der Erfindung ergeben sich aus den abhängigen Ansprüchen.

Im Folgenden wird die Erfindung anhand von Ausführungsbeispielen beschrieben, die durch die beiliegenden Zeichnungen näher erläutert werden. Hierbei zeigen schematisch:
- Fig. 1: eine Darstellung einer ersten Ausführungsform der erfindungsgemäßen Baumaschine;
- Fig. 2: eine Darstellung einer zweiten Ausführungsform der erfindungsgemäßen Baumaschine;
- Fig. 3 und 4: Detailansichten der Ausführungsform gemäß Fig. 1 in unterschiedlichen Verschwenkzuständen eines angelenkten Förderers;
- Fig. 5: eine Detaildarstellung des zum Verschwenken der Ausführungsform aus Fig. 1 verwendeten Stellelementes;
- Fig. 6: eine Detaildarstellung eines Stell- bzw. Kopplungsbereiches der Darstellung aus Fig. 5; und
- Fig. 7: eine weitere Darstellung des Stell- bzw. Kopplungsbereiches der Darstellung aus Fig. 5 mit eingelegtem Zugelement.

Im Folgenden werden für gleiche und gleich wirkende Bauteile dieselben Bezugsziffern verwendet, wobei zur Unterscheidung bisweilen Hochindizes ihre Anwendung finden.

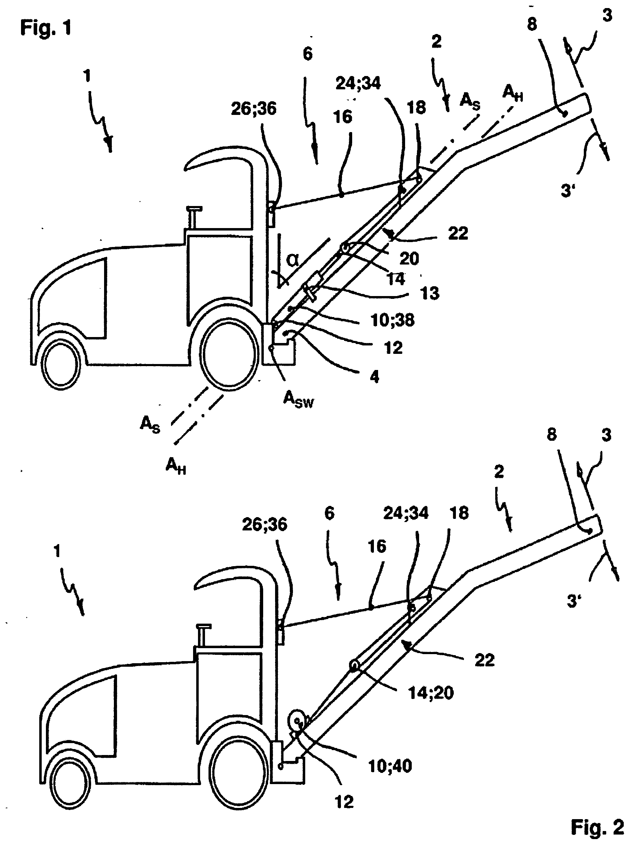

Fig. 1 zeigt eine schematische Darstellung einer ersten Ausführungsform der erfindungsgemäßen Baumaschine 1 bzw. des erfindungsgemäßen Förderers 2, der gelenkig an die Baumaschine 1 angelenkt ist. Dazu ist der Förderer 2 über einen Anlenkbereich 4 so an der Baumaschine 1 befestigt, dass er über eine Hubvorrichtung 6 vertikal (hier in Zeichnungsebene nach oben und nach unten) und um seine Schwenkachse A_{SW} verschwenkt werden kann. Auf diese Weise kann insbesondere ein Ladebereich 8 des Förderers nach oben und nach unten verschwenkt werden, wie es durch die eingezeichneten Schwenkpfeile 3 dargestellt ist, um beispielsweise den Ladebereich 8 an unterschiedlich hohe Lkw anzupassen.

Erfindungsgemäß ist bei dieser Ausführungsform des Förderers 2 die Hubvorrichtung 6 mit einem Stellelement 10 versehen, das hier als Hubzylinder 38 ausgeführt ist. Das Stellelement 10 umfasst dabei einen Fixbereich 12, mit dem es ortsfest auf dem Förderer 2 befestigt und insbesondere angeschraubt ist.

Darüber hinaus umfasst das Stellelement 10 einen Stellbereich 14, der aktiv relativ zum Fixbereich 12 bewegbar ist. Das bedeutet, dass der Abstand zwischen dem Stellbereich 14 und dem Fixbereich 12 veränderbar ist. Die aktive Bewegung wird hier beispielsweise durch die Ausführung des Hubzylinders 38 als ein hydraulisch, elektrisch oder pneumatisch angetriebener Hubzylinder und insbesondere Linearmotor erreicht.

Neben der Koppelung des Stellelementes 10 am Fixbereich 12 ist darüber hinaus ein Anschlagelement 13 vorgesehen, dass das Stellelement 10 ortsfest mit dem Förderer 2 verbindet. Durch die Befestigung über den Fixbereich 12 und das Anschlagelement 13 ist das Stellelement 10 mit seiner Haupterstreckungsachse A_{S} im Wesentliche achsenparallel zur Haupterstreckungsachse A_{H} des Förderers 2 angeordnet.

Zur Initiierung der Schwenkbewegung des Förderers 2 relativ zur Baumaschine 1, um insbesondere den hier schematisch eingezeichneten Winkel α zu verändern, ist der Stellbereich 14 über ein Zugelement 16, das an einem ersten Umlenkelement 18 umgelenkt wird, mit der Baumaschine 1 statisch gekoppelt.

Das Zugelement 16 ist bei dieser Ausführungsform vielmehr in Form eines Flaschenzugs 22 angeordnet, wobei es mit einem ersten Montageende 24 an einem ersten Montagepunkt 34 am Förderer 2 befestigt ist, von dort zu einem zweiten Umlenkelement 20 am Stellbereich 14 geführt wird, von dort zurück zum ersten Umlenkelement 18 geführt wird, von wo es dann mit einem zweiten Montageende 26 an einem zweiten Montagepunkt 36 mit der Baumaschine 1 gekoppelt wird.

Insofern ist also mit dem ersten Montagepunkt 34, dem zweiten Umlenkelement 20 und dem ersten Umlenkelement 18 ein Flaschenzug 22 gebildet, bei dem das zweite Umlenkelement 20 als lose Rolle und das erste Umlenkelement 18 als feste Rolle fungiert. Bei einer Bewegung des Stellbereichs 14 und somit des zweiten Umlenkelementes 20 relativ zum Fixbereich 12 und entlang der Haupterstreckungsachse AS des Stellelementes 10 resultiert so eine doppelt so große Bewegung in Richtung des zweiten Montagepunktes 36 und somit ein starkes Verschwenken des Förderers 2 in Richtung der Schwenkpfeile 3 bzw. um die Anlenkachse im Anlenkbereich 4.

Fig. 2 zeigt eine zweite Ausführungsform einer Baumaschine 1, an der ebenfalls eine Ausführungsform des erfindungsgemäßen Förderers 2 gelenkig angeschlagen ist. Auch hier ist eine Hubvorrichtung 6 vorgesehen, über die der Förderer 2 relativ zur Baumaschine 1 verschwenkbar ist, um insbesondere den Ladebereich 8 entlang der eingezeichneten Schwenkpfeile 3 zu verschwenken.

Die Hubvorrichtung 6 umfasst auch hier ein Stellelement 10, das jedoch im Gegensatz zu der zuvor behandelten Ausführungsform als Seilwinde 40 ausgeführt ist. Die Seilwinde 40 ist mit einem Fixbereich 12 am Förderer 2 befestigt und mit einem Stellbereich 14 mit einem Zugelement 16 gekoppelt, das wieder über ein erstes Umlenkelement 18 umgelenkt mit der Baumaschine 1 in Wirkverbindung steht. Auch hier ist das Zugelement 16 als ein Flaschenzug 22 ausgebildet, wobei es wieder mit einem ersten Montageende 24 an einem ersten Montagepunkt 34 am Förderer 2 und mit einem zweiten Montageende 26 an einem zweiten Montagepunkt 36 an der Baumaschine 1 angeschlagen ist. Die lose Rolle des Flaschenzuges 22 bildet wieder ein am Stellelement 14 ausgebildetes zweites Umlenkelement 20, während die feste Rolle durch das erste Umlenkelement 18 gebildet wird. Insofern entspricht das Übersetzungsverhältnis des gebildeten Flaschenzuges der zuvor beschriebenen Ausführungsform.

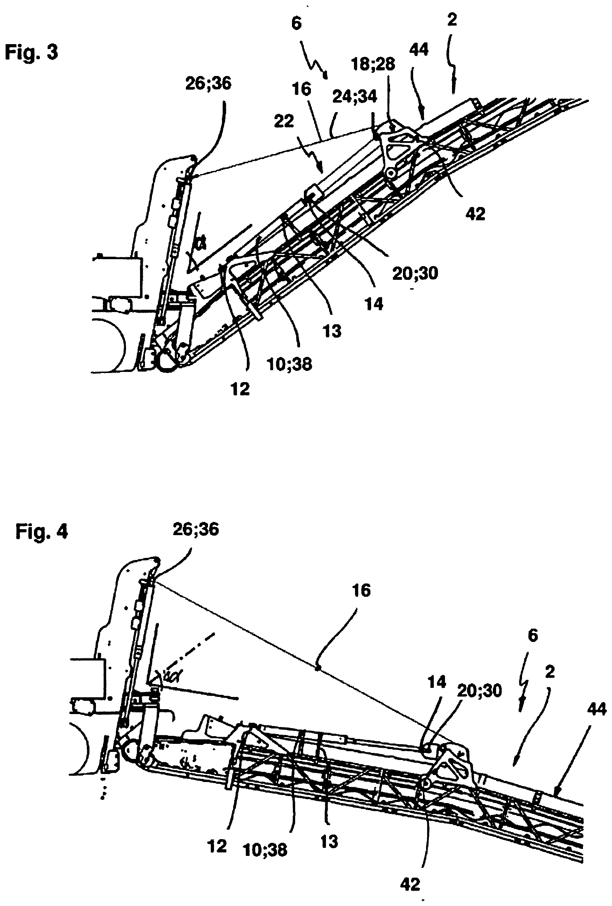

Die Fig. 3 und 4 zeigen die in Fig. 1 dargestellte Ausführungsform des Förderers 2 und insbesondere seiner Hubvorrichtung 6 im Detail, wobei Fig. 3 einen angehobenen Zustand und Fig. 4 einen Zustand zeigt, in der der Förderer 2 auf einem Boden abgelegt ist.

Erkennbar ist wieder das als Hubzylinder 38 ausgebildete Stellelement 10, das über den Fixbereich 12 und das Anschlagelement 13 achsenparallel zum Förderer 2 angeordnet ist. Gezeigt ist ebenfalls der relativ zum Fixbereich 12 aktiv bewegbare Stellbereich 14, an dem das zweite Umlenkelement 20 mit einer Umlenkrolle 30 ausgebildet ist. Entsprechend ist auch am ersten Umlenkelement 18 eine solche Umlenkrolle 28 vorgesehen.

Erkennbar ist eine am Förderer 2 ausgebildete Montagebrücke 42, die einen Förderbereich 44 des Förderers 2 so überspannt, dass Fördergut auf dem Förderbereich 44 dem Ladebereich 8 (siehe Fig. 1) zugeführt bzw. von diesem abgeführt werden kann.

Um die durch eine Bewegung des Stellbereichs 14 relativ zum Fixbereich 12 ausgeführte Relativbewegung in eine Verschwenkbewegung des Förderers relativ zur Baumaschine 1 umzusetzen, ist der Stellbereich 14 über das Zugelement 16 mit der Baumaschine 1 gekoppelt. Dazu verläuft das Zugelement 16 ausgehend vom ersten Montagepunkt 34, wo es mit dem ersten Montageende 24 angeschlagen ist, zum zweiten Umlenkelement 20, von dort zum ersten Umlenkelement 18 an der Montagebrücke 42 und von dort zur Baumaschine 1, wo es mit dem zweiten Montageende 26 am zweiten Montagepunkt 36 der Baumaschine 1 befestigt ist.

Wie in den Fig. 3 und 4 dargestellt ist durch den so ausgebildeten Flaschenzug 22 und die erfindungsgemäße Kopplung zwischen dem Stellelement 10 und dem zweiten Montagepunkt 36 an der Baumaschine 1 lediglich eine geringe Hubbewegung nötig, um den Förderer 2 um einen großen Winkel Δα zu verschwenken.

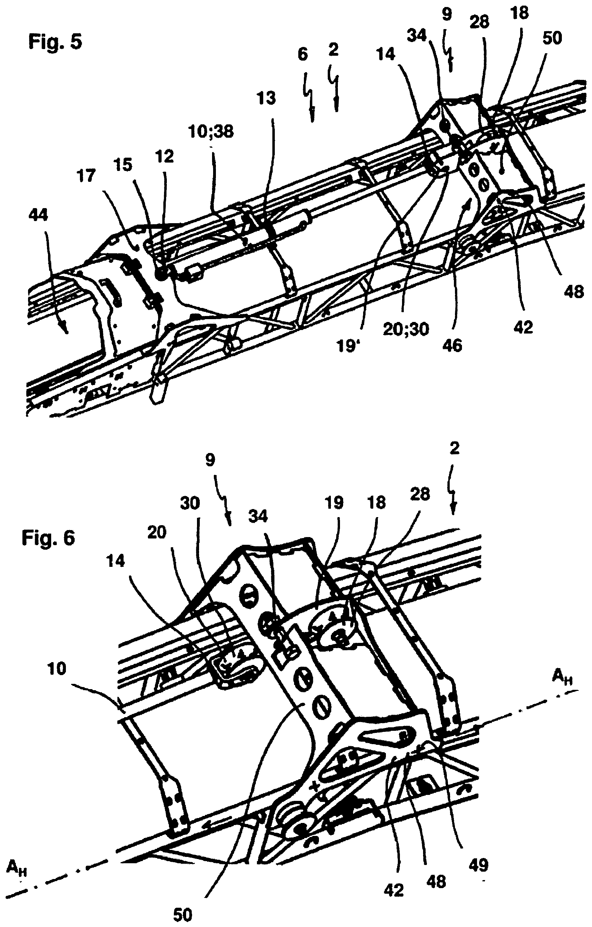

In Fig. 5 ist das in den Fig. 3 und 4 bereits im Detail dargestellte Stellelement 10 bzw. Hubzylinder 38 erneut abgebildet, wobei hier explizit die Ausbildung des Fixbereichs 12 dargestellt ist. Am Fixbereich 12 ist ein Bolzenelement 15 vorgesehen, über den das Stellelement 10 ortsfest am Förderer 2 bzw. einem Montagerahmen 17 angeschlagen ist. Eine weitere Fixierung erfolgt über das Anschlagelement 13, das das Stellelement 10 bzw. dessen "statische Komponente" ortsfest und im Wesentlichen achsenparallel zum Förderer 2 fixiert.

Weiter dargestellt ist der zur Ausbildung des Flaschenzuges (siehe insbesondere Fig. 3 und 4) verwendete Kopplungsbereich 9 der Hubvorrichtung 6. Dieser Kopplungsbereich 9 umfasst die Montagebrücke 42, die über zwei Brückenlager 48 am Förderer 2 angeschlagen ist. Unter Bildung eines lichten Förderfreiraumes 46 für das auf dem Förderer 2 und insbesondere einem Förderbereich 44 transportierten Fördergutes (nicht dargestellt) sind die beiden Brückenlager 48 über ein Querträgerelement 50 verbunden.

Auf dem Querträgerelement 50 ist der erste Montagepunkt 34, der der Befestigung des ersten Montageendes 24 des Zugelementes 16 (siehe Fig. 3 und 4) dient, angeordnet. Ebenfalls auf dem Querträgerelement 50 angeordnet ist das erste Umlenkelement 18, das mit seiner Umlenkrolle 28 der Umlenkung des Zugelementes 16 zwischen dem Stellbereich 14 des Stellelementes 10 und dem zweiten Montagepunkt 36 der Baumaschine 1 (siehe Fig. 3 und 4) dient.

Um hier eine sichere Führung des Zugelementes 16 (siehe Fig. 3, 4 und insbesondere 7) zu garantieren, weisen der Stellbereich 14 bzw. das dort ausgebildete zweite Umlenkelement 20 mit seiner Umlenkrolle 30 und der auf dem Querträgerelement 50 ausgebildete erste Montagepunkt 34 und das erste Umlenkelement 18 mit seiner Umlenkrolle 28 Führungselemente 19 auf, die insbesondere die Umlenkrollen 28 und 30 seitlich abdecken.

Der Kopplungsbereich 9 wie er in Fig. 5 dargestellt ist, ist in Fig. 6 nun in teilgeschnittener Darstellung gezeigt, wobei insbesondere die Führungselemente 19 teilgeschnitten dargestellt sind. Erkennbar ist das Stellelement 10 mit seinem Stellbereich 14, an dem das zweite Umlenkelement 20 mit seiner Umlenkrolle 30 ausgebildet ist.

Ebenfalls erkennbar ist die Montagebrücke 42, bestehend aus den Brückenlagern 48 und dem Querträgerelement 50, auf dem das erste Umlenkelement 18 mit seiner Umlenkrolle 28 und der erste Montagepunkt 34 angeordnet sind. Bei dieser Ausführungsform ist die Montagebrücke 42 entlang des Förderers 2, also parallel zu seiner Haupterstreckungsachse A_{H} bewegbar und an unterschiedlichen Montagepunkten über Fixierelemente 49 fixierbar. Auf diese Weise ist eine optimale Adaption der geometrischen Verhältnisse zwischen Baumaschine 1 und erstem Umlenkelement 28 am Förderer 2 einstellbar.

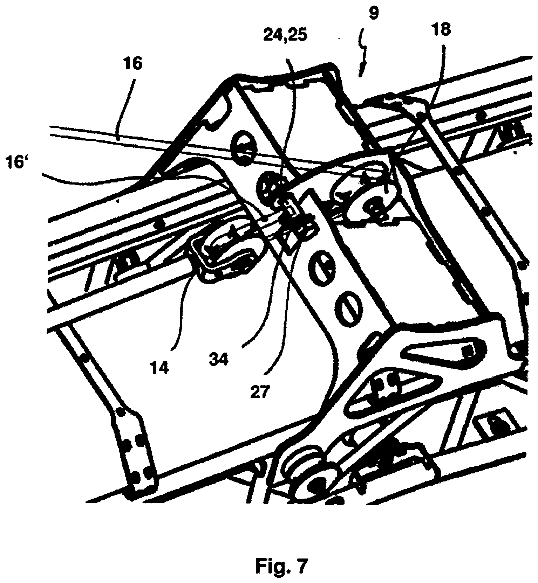

In Fig. 7 ist der in Fig. 6 dargestellte Kopplungsbereich 9 nun mit dem eingelegten Zugelement 16 dargestellt, wobei die abgebildete Relativstellung zwischen dem Stellbereich 14 und dem ersten Umlenkelement 18 dem in Fig. 4 dargestellten vollständig nach unten verschwenkten Zustand des Förderers 2 entspricht.

Erkennbar ist, dass das Zugelement 16 als Kette ausgebildet ist, die mit ihrem ersten Montageende 24, hier gebildet durch das letzte Kettenglied 25, an einem als Sperrbolzen 27 ausgebildeten ersten Montagepunkt 34 fixiert ist. Eine ähnliche Fixierung ist an der Baumaschine selbst möglich, wobei hier vorzugsweise anstelle eines Sperrbolzens 27 eine werkzeugslose Fixierung, beispielsweise ein Karabinerelement, verwendet wird.

## Patentansprüche

1. Förderer oder dergleichen Fördermittel, zum Anbau an eine Baumaschine (1) und insbesondere eine Straßenbelagsfräse, der mit einem Anlenkbereich (4) gelenkig an die Baumaschine (1) anlenkbar und über eine Hubvorrichtung (6) mit einem Ladebereich (8) gegen die Baumaschine (1) verschwenkbar ist, wobei die Hubvorrichtung (6) wenigstens ein Stellelement (10) umfasst, das mit einem Fixbereich (12) am Förderer (2) befestigt ist und mit einem relativ zum Fixbereich (12) aktiv bewegbaren Stellbereich (14) über wenigstens ein Zugelement (16) mit der Baumaschine (1) derart in Wirkverbindung bringbar ist, dass sich der Ladebereich (8) bei einer Bewegung des Stellbereichs (14) relativ zum Fixbereich (12) verschwenkt,
**dadurch gekennzeichnet,**
**dass** am Förderer (2) ein erstes Umlenkelement (18) vorgesehen ist, über das das vom Stellbereich (14) des Stelleelements (10) zugeführte Zugelement (16) umlenkbar und zur Baumaschine (1) führbar ist, wobei das Stellelement (10) am bewegbaren Stellbereich (14) ein zweites Umlenkelement (20) aufweist, das mit dem ersten Umlenkelement (18) mittels des Zugelementes (16) einen Flaschenzug (22) derart bildet, dass sich die Relativbewegung zwischen dem Fixbereich (12) und dem Stellbereich (14) vervielfacht auf die Schwenkbewegung des Förderers (2) auswirkt.

2. Förderer nach Anspruch 1,
**dadurch gekennzeichnet,**
**dass** das Zugelement (16) derart ausgebildet und am Förderer (2) angeordnet ist, dass sich der Ladebereich (8) bei einer Bewegung des Stellbereichs (14) auf den Fixbereich (12) zu anhebt und bei einer entgegengesetzten Bewegung absenkt oder umgekehrt.

3. Förderer nach einem der vorhergehenden Ansprüche,
**dadurch gekennzeichnet,**
**dass** das Zugelement (16) mit einem ersten Montageende (24) an einem ersten Montagepunkt (34) am Förderer (2) befestig ist, von dort über wenigstens das zweite Umlenkelement (20) am Stellbereich (14) des Stellelementes (10) zu wenigstens dem ersten Umlenkelement (18) am Förderer (2), von dort zur Baumaschine (1) führbar und dort mit einem zweiten Montageende (26) befestigbar ist.

4. Förderer nach einem der vorhergehenden Ansprüche,
**dadurch gekennzeichnet,**
**dass** das erste und/oder das zweite Umlenkelement (18, 20) wenigstens eine Umlenkrolle (28, 30) aufweisen.

5. Förderer nach einem der vorhergehenden Ansprüche,
**dadurch gekennzeichnet,**
**dass** das Stellelement (10) derart ausgebildet und am Förderer (2) angeordnet ist, das die Bewegung des Stellbereichs (14) im Wesentlichen in einer Achse parallel zur Haupterstreckungsachse A_{H} des Förderers (2) erfolgt.

6. Förderer nach einem der vorhergehenden Ansprüche,
**dadurch gekennzeichnet,**
**dass** wenigstens im maximal verschwenkten Zustand des Förderers (2) der Fixbereich (12) des Stellelements (10) zum Anlenkbereich (4) des Förderers (2) und der Stellbereich (14) zum Ladebereich (8) weisen oder umgekehrt.

7. Förderer nach einem der vorhergehenden Ansprüche,
**dadurch gekennzeichnet,**
**dass** das Stellelement (10) senkrecht zu seiner Haupterstreckungsachse As ortsfest und im wesentlichen parallel zur Haupterstreckungsachse A_{H} des Förderers (2) angeordnet ist.

8. Förderer nach einem der vorhergehenden Ansprüche,
**dadurch gekennzeichnet,**
**dass** das Stellelement (10) wenigstens einen Hubzylinder (38) aufweist.

9. Förderer nach einem der vorhergehenden Ansprüche,
**dadurch gekennzeichnet,**
**dass** das Stellelement (10) wenigstens eine Seilwinde (40) oder dergleichen Rotationsstellelement aufweist.

10. Förderer nach einem der vorhergehenden Ansprüche,
**gekennzeichnet durch**,
eine Montagebrücke (42), die einen Förderbereich (44) des Förderers (2) unter Bildung eines lichten Förderfreiraumes (46) im Wesentlichen überspannt und an der der erste Montagepunkt (34) und/oder das erste Umlenkelement (18) angeordnet sind.

11. Förderer nach Anspruch 10,
**dadurch gekennzeichnet,**
**dass** die Montagebrücke (42) wenigstens zwei Brückenlager (48) aufweist, die beidseitig des Förderbereiches (44) am Förderer (2) angeordnet und über wenigstens ein Querträgerelement (50) miteinander verbunden sind, wobei der erste Montagepunkt (34) und/oder das erste Umlenkelement (18) am Querträgerelement (50) angeordnet sind.

12. Förderer nach einem der Ansprüche 10 oder 11,
**dadurch gekennzeichnet,**
**dass** die Montagebrücke (42) insbesondere entlang der Haupterstreckungsachse As des Förderers bewegbar am Förderer (2) angeordnet ist.

13. Förderer nach einem der vorhergehenden Ansprüche,
**dadurch gekennzeichnet,**
**dass** der Montagepunkt (34) und/oder das erste Umlenkelement (18) und/oder das zweite Umlenkelement (20) in einer Ebene senkrecht zur Schwenkachse Asw des Förderers (2) angeordnet sind.

14. Baumaschine und insbesondere Straßenbelagsfräse an der ein Förderer (2) oder dergleichen Fördermittel gemäß einem der vorhergehenden Ansprüche angelenkt ist.

## Claims

1. A conveyor or a similar conveying means for mounting on a construction machine (1) and in particular a road surface milling machine, which conveyor can be linked with a coupling area (4) to the construction machine (1) in an articulated manner and is pivotable by way of a lifting apparatus (6) with a loading area (8) in relation to the construction machine (1), wherein the lifting apparatus (6) comprises at least one actuating element (10) which is fastened to a fixed area (12) on the conveyor (2) and which can be brought into operational connection with the construction machine (1) with an actuating area actively movable relative to the fixed area (12) via at least one pulling element (16) in such a way that the loading area (8) pivots if there is a movement of the actuating area (14) relative to the fixed area (12), **characterized in that** a first deflecting element (18) is provided on the conveyor (2) by means of which the pulling element (16) guided from the actuating area (14) of the actuating element (10) is deflectable and can be guided to the construction machine (1), wherein the actuating element comprises a second deflecting element (20) in the movable actuating area (14), which second deflecting element (20) forms a pulley system (22) with the first deflecting element (18) by means of the pulling element (16) in such a way that the relative movement between the fixed area (12) and the actuating area (14) has a multiplied impact on the pivoting movement of the conveyor (2).

2. A conveyor according to claim 1, **characterized in that** the pulling element (16) is configured and arranged on the conveyor (2) in such a way that the loading area (8) is lifted in case of a movement of the actuating area (14) towards the fixed area (12) and is lowered in case of an opposite movement or vice versa.

3. A conveyor according to one of the preceding claims, **characterized in that** the pulling element (16) is fastened to a first mounting end (24) at a first mounting point (34) on the conveyor (2), is guidable from there via at least the second deflecting element (20) on the actuating area (14) of the actuating element (10) to at least the first deflecting element (18) on the conveyor (2) and from there to the construction machine (1), and can be fastened there with a second mounting end (26).

4. A conveyor according to one of the preceding claims, **characterized in that** the first and/or the second deflecting element (18, 20) comprise/comprises at least one deflection pulley (28, 30).

5. A conveyor according to one of the preceding claims, **characterized in that** the actuating element (10) is configured and arranged on the conveyor in such a way that the movement of the actuating area (14) occurs essentially on an axis parallel to the main extension axis A_{H} of the conveyor (2).

6. A conveyor according to one of the preceding claims, **characterized in that**, at least in the maximally pivoted state of the conveyor (2), the fixed area (12) of the actuating element (10) faces the linkage area (4) of the conveyor (2) and the actuating area (14) faces the loading area (8) or vice versa.

7. A conveyor according to one of the preceding claims, **characterized in that** the actuating element (10) is arranged in a stationary manner perpendicular to its main extension axis As and essentially parallel to the main extension axis A_{H} of the conveyor (2).

8. A conveyor according to one of the preceding claims, **characterized in that** the actuating element (10) comprises at least one lifting cylinder (38).

9. A conveyor according to one of the preceding claims, **characterized in that** the actuating element (10) comprises at least one cable winch (40) or a similar rotational actuating element.

10. A conveyor according to one of the preceding claims, **characterized by** a mounting bridge (42) which essentially spans a conveying area (44) of the conveyor (2) while forming a clear conveying area (46) and on which the first mounting point (34) and/or the first deflecting element (18) are/is arranged.

11. A conveyor according to claim 10, **characterized in that** the mounting bridge (42) comprises at least two bridge bearings (48) which are arranged on the conveyor (2) on either side of the conveying area (44) and are connected with each other via at least one cross member element (50), the first mounting point (34) and/or the first deflecting element (18) being arranged on the cross member element (50).

12. A conveyor according to claims 10 or 11, **characterized in that** the mounting bridge (42) is arranged to be movable along the conveyor (2), in particular along the main extension axis As of the conveyor.

13. A conveyor according to one of the preceding claims, **characterized in that** the mounting point (34) and/or the first deflecting element (18) and/or the second deflecting element (20) are arranged in a plane perpendicular to the pivoting axis Asw of the conveyor (2).

14. A construction machine, in particular a road surface milling machine, to which a conveyor (2) or a similar conveying means according to one of the preceding claims is linked.

## Revendications

1. Convoyeur ou moyen d'acheminement similaire destiné à être monté sur un engin de chantier (1) et en particulier sur un engin de fraisage de chaussée, ledit convoyeur pouvant être relié par une zone de couplage (4) à l'engin de chantier (1) de manière articulée et pouvant pivoter au moyen d'un dispositif de levage (6) avec une zone de chargement (8) en relation avec l'engin de chantier (1), dans lequel le dispositif de levage (6) comprend au moins un élément d'actionnement (10) qui est assujetti à une zone fixe (12) sur le convoyeur (2) et qui peut être amené en liaison fonctionnelle avec l'engin de chantier (1), avec une zone d'actionnement mobile de manière active par rapport à la zone fixe (12) par l'intermédiaire d'au moins un élément de traction (16) d'une façon telle que la zone de chargement (8) pivote s'il se produit un déplacement de la zone d'actionnement (14) par rapport à la zone fixe (12),
***caractérisé en ce qu***'un premier élément déflecteur (18) est prévu sur le convoyeur (2), au moyen duquel l'élément de traction (16) guidé depuis la zone d'actionnement (14) de l'élément d'actionnement (10) peut être dévié et peut être guidé vers l'engin de chantier (1), l'élément d'actionnement comprenant un second élément déflecteur (20) dans la zone d'actionnement mobile (14), ledit second élément déflecteur (20) formant un système de palan (22) avec le premier élément déflecteur (18) au moyen de l'élément de traction (16) d'une manière telle que le déplacement relatif entre la zone fixe (12) et la zone d'actionnement (14) ait un impact multiplié sur le mouvement pivotant du convoyeur (2).

2. Convoyeur selon la revendication 1, ***caractérisé en ce que*** l'élément de traction (16) est configuré et monté sur le convoyeur (2) d'une façon telle que la zone de chargement (8) soit soulevée dans le cas d'un déplacement de la zone d'actionnement (14) en direction de la zone fixe (12) et soit abaissée dans le cas d'un mouvement opposé, ou vice versa.

3. Convoyeur selon l'une quelconque des revendications précédentes, ***caractérisé en ce que*** l'élément de traction (16) est assujetti à une première extrémité de montage (24) au niveau d'un premier point de montage (34) sur le convoyeur (2), peut être guidé à partir de là via au moins ledit second élément déflecteur (20) sur la zone d'actionnement (14) de l'élément d'actionnement (10) vers au moins ledit premier élément déflecteur (18) sur le convoyeur (2) et de là vers l'engin de chantier (1), et peut y être assujetti avec une seconde extrémité de montage (26).

4. Convoyeur selon l'une quelconque des revendications précédentes, ***caractérisé en ce que*** le premier et/ou le second élément déflecteur (18, 20) comprennent/comprend au moins une poulie de renvoi (28, 30).

5. Convoyeur selon l'une quelconque des revendications précédentes, ***caractérisé en ce que*** l'élément d'actionnement (10) est configuré et monté sur le convoyeur d'une façon telle que le déplacement de la zone d'actionnement (14) se produise essentiellement sur un axe parallèle à l'axe d'extension principal AH du convoyeur (2).

6. Convoyeur selon l'une quelconque des revendications précédentes, ***caractérisé en ce que,*** au moins à l'état de pivotement maximum du convoyeur (2), la zone fixe (12) de l'élément d'actionnement (10) fait face à la zone de couplage (4) du convoyeur (2) et la zone d'actionnement (14) fait face à la zone de chargement (8), ou vice versa.

7. Convoyeur selon l'une quelconque des revendications précédentes, ***caractérisé en ce que*** l'élément d'actionnement (10) est monté de manière fixe perpendiculaire à son axe d'extension principal AS et essentiellement parallèle à l'axe d'extension principal AH du convoyeur (2).

8. Convoyeur selon l'une quelconque des revendications précédentes, ***caractérisé en ce que*** l'élément d'actionnement (10) comprend au moins un vérin de levage (38).

9. Convoyeur selon l'une quelconque des revendications précédentes, ***caractérisé en ce que*** l'élément d'actionnement (10) comprend au moins un treuil à câble ou un élément d'actionnement rotatif similaire.

10. Convoyeur selon l'une quelconque des revendications précédentes, ***caractérisé par*** un pont de montage (42) qui enjambe essentiellement une zone d'acheminement (44) du convoyeur (2) tout en formant une zone d'acheminement dégagée (46) et sur lequel le premier point de montage (34) et/ou le premier élément déflecteur (18) sont/est placé(s).

11. Convoyeur selon la revendication 10, ***caractérisé en ce que*** le pont de montage (42) comprend au moins deux paliers (48) de pont qui sont montés sur le convoyeur (2) de part et d'autre de la zone de d'acheminement (44) et sont raccordés l'un à l'autre via au moins un élément de traverse (50), le premier point de montage (34) et/ou le premier élément déflecteur (18) étant monté(s) sur l'élément de traverse (50).

12. Convoyeur selon les revendications 10 ou 11, ***caractérisé en ce que*** le pont de montage (42) est monté de manière à être mobile le long du convoyeur (2), en particulier le long de l'axe d'extension principal AS du convoyeur.

13. Convoyeur selon l'une quelconque des revendications précédentes, ***caractérisé en ce que*** le point de montage (34) et/ou le premier élément déflecteur (18) et/ou le second élément déflecteur (20) sont disposés dans un plan perpendiculaire à l'axe de pivot ASW du convoyeur (2).

14. Engin de chantier, en particulier engin de fraisage de chaussée, auquel est réuni de manière articulée un convoyeur (2) ou un moyen d'acheminement similaire selon l'une quelconque des revendications précédentes.
